# EUROPÄISCHE PATENTSCHRIFT

(11) **EP 1 752 325 B1**
(45) Veröffentlichungstag und Bekanntmachung des Hinweises auf die Patenterteilung: **19.11.2008**
(21) Anmeldenummer: 06012691.9
(22) Anmeldetag: 21.06.2006
(51) Int. Cl.: B60J 7/02

(54) **Dachsystem für einen Personenkraftwagen**
Roof system for a car
Système de toit pour véhicule

(30) Priorität: 10.08.2005 DE 10537911
(43) Veröffentlichungstag der Anmeldung: 14.02.2007
(73) Patentinhaber: AUDI AG, 85045 Ingolstadt (DE)
(72) Erfinder: Danzl, Martin, 83115 Neubeuern (DE); Isgen, Dirk, 85080 Gaimersheim (DE); Hackenberg, Ulrich, Dr., 85139 Wettstetten (DE)
(74) Vertreter: Engelhardt, Harald

(56) Entgegenhaltungen:
- DE-A1- 2 723 996
- US-A- 4 801 174
- US-A- 4 852 938

## Beschreibung

Die Erfindung bezieht sich auf ein Dachsystem für einen Personenkraftwagen, mit einem Überrollbügel, mindestens einem vor dem Überrollbügel angeordneten Schiebedeckel und sich an den Überrollbügel nach hinten anschließenden, etwa dreieckförmigen Seitenwandabschnitten deren obere Seiten von dem Überrollbügel ausgehend schräg nach hinten abfallen, wobei der Schiebedeckel in seiner zurückverschobenen Stellung in eine etwa waagerechte Verstauposition verschwenkbar ist.

Ein derartiges Dachsystem ist aus der DE 27 23 996 A1 bekannt. Der Schiebedeckel lässt sich dort über seitliche Führungsschienen und in diese eingreifende Rollen von seiner Schließstellung über dem Fahrgastraum in eine Ablagestellung über der Heckklappe bewegen. Die US-A-4801174 zeigt und beschreibt ebenfalls einen Personenkraftwagen mit einem Überrollbügel und einem Schiebedeckel. An den Überrollbügel schließen sich etwa dreieckförmige Seitenwandabschnitte mit Führungseinrichtungen an, die dazu dienen, den Schiebedeckel über den Überrollbügel hinweg in eine Ablageposition zu bringen, in der der Schiebedeckel über der schräg geneigten Heckscheibe angeordnet ist.

Der Erfindung liegt die Aufgabe zugrunde, bei einem Fahrzeug mit einem Überrollbügel und einem Schiebedeckel die Vorraussetzung für einen relativ großen Schiebedeckel zu schaffen, der durch eine entsprechende Mechanik über den Überrollbügel hinaus nach hinten verschoben werden kann.

Die Aufgabe wird dadurch gelöst, dass zumindest die obere, etwa horizontal verlaufende Blende des Überrollbügels anhebbar ist, dass der Schiebedeckel unter der angehobenen Blende hindurch über Führungsschienen im Bereich der sich an den Überrollbügel nach hinten anschließenden, etwa dreieckförmigen Seitenwandabschnitten nach hinten verschiebbar ist, und dass der Schiebedeckel in seiner zurückverschobenen Stellung in eine etwa waagerechte Verstauposition schwenkbar ist.

Die anhebbare Blende des Überrollbügels in Verbindung mit Führungsschienen im Bereich der oberen Seiten der dreieckförmigen Seitenwandabschnitte schaffen die Vorraussetzung, dass ein relativ großer Schiebedeckel von seiner Position vor dem Überrollbügel in eine Stellung hinter den Überrollbügel gebracht werden kann und dort in etwa waagerechte Verstauposition verschwenkbar ist. Dadurch, dass nur die Blende des Überrollbügels angehoben wird, um den Durchtritt des Schiebedeckels zu ermöglichen, tritt keine festigkeitsmäßige Veränderung im Aufbau ein, wenn der Schiebedeckel zurück verschoben wird. An den Überrollbügel schließen sich nach hinten etwa dreieckförmige Seitenwandabschnitte an, deren obere Seiten von dem Überrollbügel ausgehend schräg nach hinten abfallen und welche die Führungsschienen für den Überrollbügel aufnehmen. Dadurch können von vorne bis nach hinten verlaufende, ggf. versatzfreie Führungsschienen realisiert werden, die als solche nicht störend in Erscheinung treten, selbst wenn sie nicht abdeckbar ausgeführt sein sollten.

Für den Schiebedeckel können verschiedene, an sich bekannte Deckelkonstruktionen Verwendung finden. Vorteilhaft ist beispielsweise ein Glasdeckel, dessen Hinterkante anhebbar ist, wenn sich der Glasdeckel in seiner Position vor dem Überrollbügel befindet.

Durch das erfindungsgemäße Dachsystem wird auch die Vorraussetzung dafür geschaffen, dass der Schiebedeckel in eine etwa waagerechte Verstauposition zwischen den dreieckförmigen Seitenwandabschnitten gebracht wird. In dieser Stellung beeinträchtigt der Schiebedeckel weder den im Fahrzeug vorhanden Stauraum, noch den Blick des Fahrzeuglenkers nach hinten. Das neue Dachsystem schafft dadurch ein Fahrzeug, welches cabrioartigen Charakter hat.

Um dies zu ermöglichen, kann gemäß einer vorteilhaften Ausgestaltung der Erfindung der Schiebedeckel in seiner zurückverschobenen Stellung durch nach unten schwenkbare Führungsschienen in die etwa waagerechte Verstauposition bewegbar sein. Es bleibt also die Zuordnung der Führungsschiene zu dem Schiebedeckel in vorteilhafter Weise erhalten. Das Absenken der Führungsschienen kann durch einfache Schwenkachsen in ihrem rückwärtigen Endbereich realisiert werden. Neben Lösungen, die von Hand betätigt werden, können dafür ohne allzu großen Bauaufwand auch gesteuerte Antriebe eingesetzt werden. Es versteht sich von selbst, dass zum Verschwenken des Schiebedeckels in die waagerechte Verstauposition die Länge der den Schiebedeckel aufnehmenden Führungsschienen mindestens der Länge des Schiebedeckels entsprechen müssen.

Alternativ zu den angesprochenen verschwenkbaren Führungsschienen kann der Schiebedeckel in seiner zurück verschobenen Stellung zusammen mit nach unter verschwenkbaren Seitenwandabschnitten in die etwa waagerechte Verstauposition bewegt werden. In diesem Falle sind schlitzförmige Ausnehmungen in der Karosserie notwendig, durch die die Seitenwandabschnitte versenkbar sind. Im Gegensatz zu den nach unten verschwenkbaren Führungsschienen erfordert die zuletzt beschriebene Variante natürlich einen entsprechenden Bauraum zum Absenken der Seitenwandabschnitte.

Besonders vorteilhaft ist, wenn der Überrollbügel eine absenkbare Heckscheibe umschließt. Eine solche Heckscheibe wird entsprechend der Anordnung des Überrollbügels eine etwa senkrechte Stellung einnehmen. Wird diese Heckscheibe abgesenkt, dann verstärkt sich dadurch bei in der Verstauposition befindlichem Schiebedeckel der Eindruck, ein offenes Fahrzeug zu fahren.

Die vorliegende Erfindung ist nicht auf die vorstehend beschriebenen Ausgestaltungen beschränkt. Es sind vielmehr weitere Kombinationen möglich, sowohl bezogen auf die Ausgestaltung des Schiebedeckels und seiner Verschiebemöglichkeiten, der anhebbaren Blende des Überrollbügels, aber auch in Bezug auf das Verschwenken des Schiebedeckels in seiner zurück geschobenen Stellung. Prägend für die Erfindung ist jedoch, dass ein vor dem Überrollbügel angeordneter Schiebedeckel unter einer angehobenen Blende eines Überrollbügels oder durch einen angehobenen Abschnitt des Überrollbügels selbst unter diesen hindurch bewegbar ist und sich entlang von Führungen im Bereich der oberen Seiten von dreieckförmigen Seitenwandabschnitten nach hinten verschieben lässt.

Ein Ausführungsbeispiel der Erfindung ist in der Zeichnung dargestellt und wird nachfolgend näher beschrieben. Es zeigen
- Fig. 1: in perspektivischer Darstellung ein Prinzipbild, das den oberen Abschnitt eines Personenkraftwagens mit einem Überrollbügel und einem vor dem Überrollbügel angeordneten Schiebedeckel zeigt,
- Fig. 2: die Darstellung aus Fig. 1, wobei eine Blende des Überrollbügels angehoben ist und der Schiebedeckel unter dieser Blende teilweise nach hinten verschoben ist,
- Fig. 3: im weiteren Bewegungsablauf den Schiebedeckel gemäß den Fig. 1 und 2 in einer Stellung, bei der er vollständig zurück geschoben ist und sich zwischen zwei dreieckförmigen Seitenwandabschnitten der Karosserie erstreckt und
- Fig. 4: eine Darstellung, bei der der Schiebedeckel gemäß den Fig. 1-3 in seiner zurück verschobenen Stellung in eine etwa waagerechte Verstauposition verschwenkt ist.

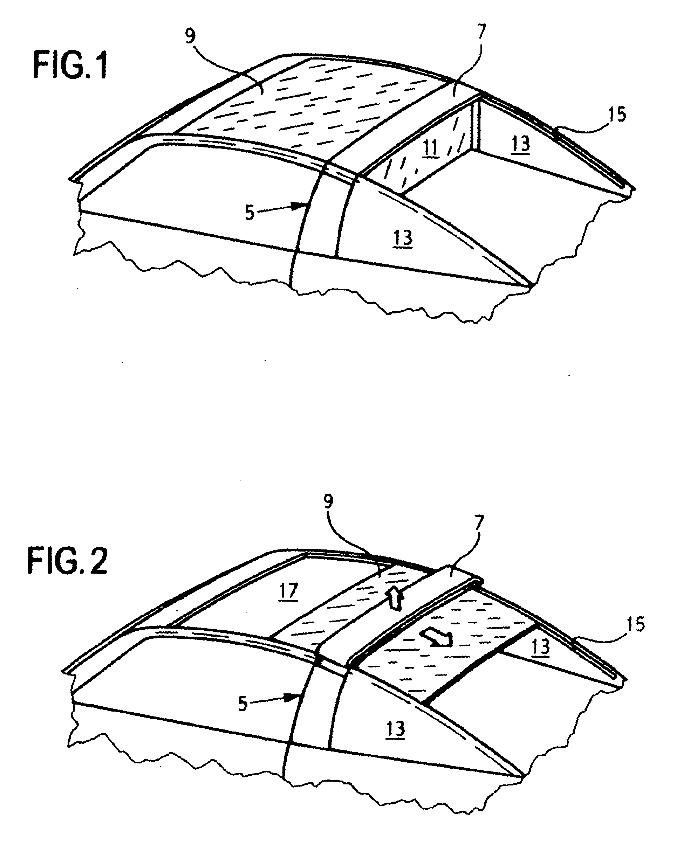

Der Dachbereich eines in den Fig. 1-4 dargestellten Personenkraftwagens weist einen Überrollbügel 5 mit einer oberen, anhebbaren Blende 7 auf. Vor dem Überrollbügel 5 ist ein Schiebedeckel 9 angeordnet, der in seiner voll geschlossenen Stellung wiedergegeben ist. Bei dem Schiebedeckel handelt es sich um einen Glasdeckel, dessen hintere Kante anhebbar ist und der natürlich auch so ausgeführt ist, dass er in eine Offenstellung nach hinten verschoben werden kann.

Wie die Fig. 1 außerdem erkennen lässt, ist der Fahrgastraum des Personenkraftwagens nach hinten hin durch eine etwa senkrecht stehende Heckscheibe 11 begrenzt, welche von dem Überrollbügel 5 umschlossen ist. An die seitlichen Abschnitte des Überrollbügels 5 schließen sich nach hinten etwa dreieckförmige Seitenwandabschnitte 13 an, an deren obere Seiten Führungsschienen 15 angeordnet sind.

Die Fig. 2 zeigt bei gleicher Darstellweise den Dachbereich des Personenkraftwagens aus Fig. 1. Im Gegensatz dazu befindet sich jedoch die Blende 7 in einer angehobenen Stellung und der Schiebedeckel 9 in einer Position, in der er unter der Blende 7 hindurch teilweise zurück verschoben ist. Dabei wird ein Teil des Schiebedeckels 9 bereits von den Führungsschienen 15 aufgenommen. Dieser Zustand kann nicht nur eine Zwischenstellung für den weiteren Bewegungsablauf darstellen, sondern auch eine Einstellung wiedergeben, bei der der Fahrzeuglenker zur besseren Belüftung den Schiebedeckel 9 teilweise geöffnet hat.

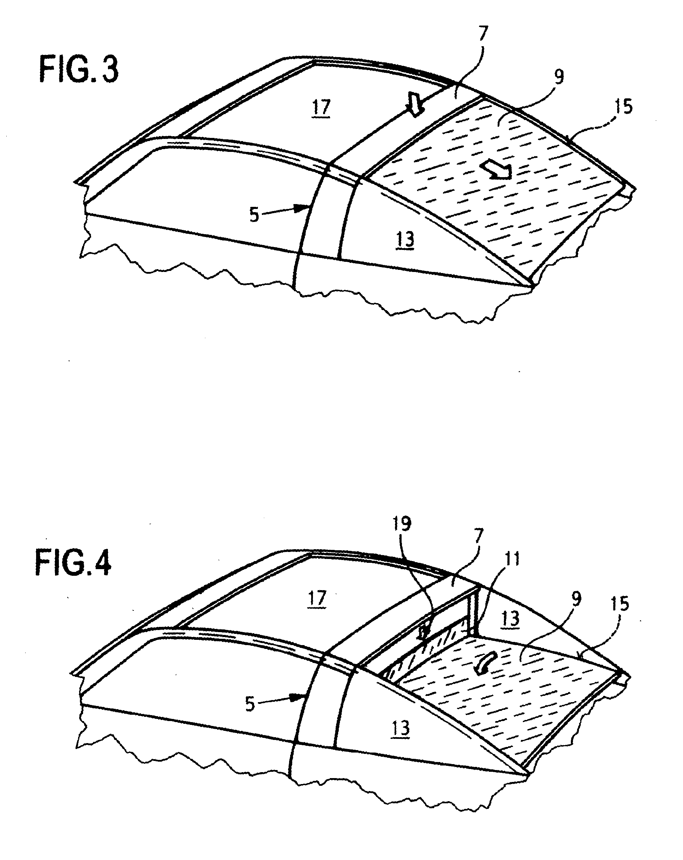

Fig. 3 zeigt eine Stellung des Schiebedeckels 9, bei der die vor dem Überrollbügel 5 angeordnete Öffnung 17 für den Schiebedeckel 9 vollständig freigegeben ist. Der Schiebedeckel 9 befindet sich in der gezeigten Stellung in einer schräg geneigten Position, bei der er vollständig von den Führungsschienen 15 aufgenommen ist. Zusammen mit den beiden Seitenwandabschnitten 13 und dem Schiebedeckel 19, der wie erwähnt als Glasdeckel ausgeführt ist, ergibt sich ein Eindruck, der einem Fahrzeug mit einer stark geneigten Heckscheibe entspricht.

Schließlich ist in Fig. 4 ein Zustand wiedergegeben, bei dem ausgehend von der Lage des Schiebedeckels 9 in Fig. 3 dieser in eine etwa waagerechte Verstauposition verschwenkt ist. Um dies zu ermöglichen, sind die Führungsschienen 15 zusammen mit dem Schiebedeckel 9 um eine rückwärtige Schwenkachse durch nicht gezeigte Einrichtungen bewegt worden.

Wenn es erwünscht ist, kann selbstverständlich auch die Heckscheibe 11 nach unten verfahren werden (durch einen Pfeil 19 angedeutet), um den offnen Eindruck zu verstärken.

## Patentansprüche

1. Dachsystem für einen Personenkraftwagen, mit einem Überrollbügel (5), mindestens einem vor dem Überrollbügel (5) angeordneten Schiebedeckel (9) und sich an den Überrollbügel (5) nach hinten anschließenden, etwa dreieckförmigen Seitenwandabschnitten (13) deren obere Seiten von dem Überrollbügel (5) ausgehend schräg nach hinten abfallen, wobei der Schiebedeckel (9) in seiner zurückverschobenen Stellung in eine etwa waagerechte Verstauposition verschwenkbar ist, **dadurch gekennzeichnet, dass** zumindest die obere, etwa horizontal verlaufende Blende (7) des Überrollbügels (5) anhebbar ist und der Schiebedeckel (9) unter der angehobenen Blende (7) hindurch über Führungsschienen (15) im Bereich der oberen Seiten der dreieckförmigen Seitenwandabschnitte (13) nach hinten verschiebbar ist.

2. Dachsystem nach Anspruch 1, **dadurch gekennzeichnet, dass** der Schiebedeckel (9) in seiner zurückverschobenen Stellung durch nach unten schwenkbare Führungsschienen (15) in die etwa waagerechte Verstauposition bewegbar ist.

3. Dachsystem nach Anspruch 1, **dadurch gekennzeichnet, dass** der Schiebedeckel (9) in seiner zurückverschobenen Stellung zusammen mit nach unten verschwenkbaren Seitenwandabschnitten (13) in die etwa waagerechte Verstauposition bewegbar ist.

4. Dachsystem nach einem der Ansprüche 1 bis 3, **dadurch gekennzeichnet, dass** der Überrollbügel (5) eine absenkbare Heckscheibe (11) umschließt.

## Claims

1. Roof system for a car, with a roll-over bar (5), at least one sliding roof (9) arranged in front of the roll-over bar (5), and approximately triangular sidewall segments (13) adjoining the roll-over bar (5) to the rear with their top edges sloping down rearwards from the roll-over bar (5), the sliding roof (9) when in the slid-back position being pivotable into an approximately horizontal stowage position, **characterized in that** at least the upper, approximately horizontally extending hider (7) of the roll-over bar (5) is raisable, and the sliding roof (9) is displaceable rearwards under the raised hider (7) over guide rails (15) in the region of the top edges of the triangular sidewall segments (13).

2. Roof system according to Claim 1, **characterized in that** the sliding roof (9) when in the slid-back position is movable by downwards-pivotable guide rails (15) into the approximately horizontal stowage position.

3. Roof system according to Claim 1, **characterized in that** the sliding roof (9) when in the slid-back position is movable together with downwards-pivotable sidewall segments (13) into the approximately horizontal stowage position.

4. Roof system according to any one of Claims 1 to 3, **characterized in that** the roll-over bar (5) surrounds a lowerable rear window.

## Revendications

1. Système de toit pour une voiture particulière avec un arceau de sécurité (5), au moins un panneau coulissant (9) disposé devant l'arceau de sécurité (5) et des sections de paroi latérale (13) à peu près triangulaires, contiguës à l'arceau de sécurité (5) vers l'arrière, dont les côtés supérieurs s'inclinent vers le bas en partant de l'arceau de sécurité (5), le panneau coulissant (9) dans sa position coulissée en arrière pouvant être pivoté dans une position de rangement à peu près horizontale, **caractérisé en ce qu'**au moins le bandeau (7) supérieur, s'étendant à peu près horizontalement, de l'arceau de sécurité (5) peut être relevé et le panneau coulissant (9) peut être déplacé vers l'arrière sous le bandeau (7) relevé, par le biais de rails de guidage (15) dans la zone des côtés supérieurs des sections de paroi latérale (13) triangulaires.

2. Système de toit selon la revendication 1, **caractérisé en ce que** le panneau coulissant (9) dans sa position coulissée en arrière peut être déplacé par des rails de guidage (15) pivotant vers le bas dans la position de rangement à peu près horizontale.

3. Système de toit selon la revendication 1, **caractérisé en ce que** le panneau coulissant (9) dans sa position coulissée en arrière peut être déplacé conjointement avec des sections de paroi latérale (13) pivotant vers le bas, dans la position de rangement à peu près horizontale.

4. Système de toit selon l'une quelconque des revendications 1 à 3, **caractérisé en ce que** l'arceau de sécurité (5) comprend une lunette arrière (11) pouvant être abaissée.
